# EUROPEAN PATENT APPLICATION

(11) **EP 4 660 451 A1**
(43) Date of publication of application: **10.12.2025**
(21) Application number: 24180568.8
(22) Date of filing: 06.06.2024
(51) Int. Cl.: F03D 9/17, F03D 9/28

(54) **A SYSTEM FOR STORING ENERGY AND PRODUCING ELECTRICITY**

(71) Applicant: Chmielorz, Wojciech, 43-190 Mikolow (PL)
(72) Inventor: Chmielorz, Wojciech, 43-190 Mikolow (PL)
(74) Representative: AOMB Polska Sp. z.o.o.

(57) **Abstract**

A system for storing energy and producing electricity, comprising:
- a wind turbine (1),
- a hydraulic pump (2), connected mechanically with the turbine (1), so that the turbine (1) can power the pump (2),
- a hydraulic engine (7),
- an assembly of hydraulic hoses, that connects the hydraulic pump (2) with the hydraulic engine (7), forming a closed loop,
- a compressor assembly (8), mechanically connected to the hydraulic engine (7), so that the engine (7) can power the compressor assembly (8),
- a compressed gas storage assembly (10), comprising pressurized air tanks along with pressurized air conduits and valves, having a charging side and discharging side,
- a depressurizing assembly (11), connected with the discharging side of the compressed gas storage assembly (10),
- a pneumatic engine (13), connected to the depressurizing assembly (11),
- a main electric generator (14), mechanically connected to and powered by the pneumatic engine (13),
wherein the system further comprises a feedback line, connecting the pneumatic engine (13) back to the compressor assembly (8).

## Description

### Technical field

The present invention relates to the field of converting and storing energy of the wind, so that it can be later utilized to produce electricity and potentially heat or cold, for the utilization in providing these media to a household or an industrial facility.

### Prior art

There are many solutions available in the world when it comes to wind turbines - ranging from small devices the size of a hand, up to massive towers that can produce many MW of electrical power each.

There are also many knows solutions with respect to storing energy using compressed air systems -where great underground cavers are filled with vast amounts of compressed air, to help in storing amount of energy on industrial scale.

However, when one tries to find solutions scaled down to fit the needs of e.g. a single household - one can find many different wind turbines with varying rated power, but in order to store such energy - widely available are only electrochemical cells. These are unfortunately relatively costly, and although they have very desirable characteristics with respect to their efficiency and power/energy-to-weight/size ratio, they mostly require complicated and costly electronical devices to manage them - so that if something gets damaged with use the user most likely would not be able to repair it on their own, or even with the use of commonly available items.

That is why-there is a need to provide a solution for utilizing energy of the wind, thatwould rely on a more time-tested and easily repairable components, so that people living in relatively remote areas or secluded villages could perform some maintenance and repairs on their own, without relying on highly advance electronic components.

### Aim of the invention

Therefore, the aim of the present invention is to provide a system for storing energy and production of electricity that utilizes more simplified components, that will on one hand ensure longevity while on the other will allow for repairs (to a degree) to be performed by the user.

The object of the invention is a system for storing energy and producing electricity, comprising:
- a wind turbine,
- a hydraulic pump, connected mechanically with the turbine, so that the turbine can power the pump,
- a hydraulic engine,
- an assembly of hydraulic hoses, that connects the hydraulic pump with the hydraulic engine, forming a closed loop,
- a compressor assembly, mechanically connected to the hydraulic engine, so that the engine can power the compressor assembly,
- a compressed gas storage assembly, comprising pressurized air tanks along with pressurized air conduits and valves, having a charging side and discharging side,
- a depressurizing assembly, connected with the discharging side of the compressed gas storage assembly,
- a pneumatic engine, connected to the depressurizing assembly,
- a main electric generator, mechanically connected to and powered by the pneumatic engine,
wherein the system further comprises a feedback line, connecting the pneumatic engine back to the compressor assembly.

Preferably, the system further comprises:
- an auxiliary engine-generator, mechanically connected to the turbine and the pump via a disengaging clutch and configured to work in at least three modes of operation:
   i - generating electricity
   ii - standby
   iii - start-up

and wherein the system further comprises an electrical storage device,
wherein in mode i - the engine-generator utilizes mechanical energy of the rotating turbine to produce electricity and provide it to the electrical storage device,
wherein in mode ii - the engine-generator uses the clutch to disengage from the turbine and the pump, so that it doesn't cause any unnecessary efficiency losses,
wherein in mode iii - the engine-generator utilizes the electricity stored in the electrical storage device to help the turbine and the pump to start rotating with a desired speed, and if needed - to help compensate for the possible rapid changes in the rotational speed of the turbine or differences of pressure in the assembly of the hydraulic hoses.

Preferably, the system further comprises a photo-voltaic module connected to the engine-generator and the electrical storage device via a regulator.

Preferably, the system further comprises a heat-recovery assembly, comprising:
- at least one heat exchanger, connected with the compressor assembly,
- at least one heat-storage device,
- an assembly of conduits, connecting the at least one heat exchanger with the at least one heat-storage device and forming a closed loop.

Preferably, the at least one heat storage device is in form of an isolated hot-water tank.

Preferably, the at least one heat storage device is in form of an underground heat storage, that is further connected with a heat pump.

Preferably, the heat-recovery assembly further comprises a cooling system of the main generator, to retrieve heat generated by the generator.

Preferably, the system further comprises a cold-storage assembly, which is configured such that the air passes through it after leaving the depressurizing assembly an before reaching the pneumatic engine,
wherein said cold-storage assembly is further connected with a recuperation or AC installation.

Preferably, the compressor assembly comprises two or more compressors, wherein the there is one heat exchanger arranged for each of the compressors.

Preferably, the compressor assembly is provided with an air filtering system, preferably also including a de-humidifying system.

Preferably, there is more than one wind turbine and more than one hydraulic pump,
wherein each of the wind turbines powers its' own hydraulic pump, but all of the hydraulic pumps, via their respective assemblies of hydraulic hoses, provide pressurized liquid to power a single hydraulic engine.

Alternatively, there is more than one wind turbine and more than one hydraulic pump, and more than one hydraulic engine,
wherein each of the wind turbines powers its' own hydraulic pump, and each hydraulic pump, via their respective assemblies of hydraulic hoses, provides pressurized liquid to power their respective hydraulic engines,
wherein the hydraulic engines are connected mechanically and in a releasable manner with a shared compressor assembly.

Preferably, the pressurized air tanks of the compressed gas storage assembly are chosen from the normalized tanks, that can withstand the pressures of 200-300 bar,
and wherein the compressor assembly is suitable and configured for compressing the air to the pressures of 200-300 bar.

Preferably, the system is scaled such, that the power of the turbine(s) and the maximum capacity of the compressed gas storage assembly relate to each other in a following manner - for each 1 KW of rated power of the wind turbine(s) the compressed gas storage assembly has the total storage volume between 2 to 60 dm³.

Additionally, the solution causes that energy flows from more to less probability stages, it means process is orderly. Value which describe grade of this orderliness is called entropy.

### Brief description of drawings

The present invention will be now described in more detail in exemplary and preferred embodiments in relation to the attached drawing, in which:
Fig. 1 presents an exemplary view of one of the most complicated variants of the invention,
Fig. 2 presents an exemplary view of the most basic variant of the invention,
Fig. 3 presents variant from Fig. 2 with an auxiliary engine-generator,
Fig. 4 presents variant from Fig. 3 with an additional photovoltaic module,
Fig. 5 presents variant from Fig. 4 with additional heat storage devices,
Fig. 6 presents variant from Fig. 5 with an additional heat pump,
Fig. 7 presents variant from Fig. 6 with an additional heat recovery loop,
Fig. 8 presents variant from Fig. 7 with an additional cold storage assembly,
Fig. 9 presents variant from Fig. 8 with more than one compressor,
Fig. 10 presents variant from Fig. 9 with an additional air filtering system,
Fig. 11 presents variant of the invention with several wind turbines and one hydraulic engine, whereas
Fig. 12 presents variant of the invention with several wind turbines and several hydraulic engines.

List of numeric references:
1 - wind turbine
2 - hydraulic pump
3 - auxiliary engine-generator
4 - regulator
5 - electrical storage device
6 - photovoltaic module
7 - hydraulic engine
8 - compressor assembly/compressor
9 - heat exchanger
10 - compressed gas storage assembly
11 - depressurizing assembly
12 - cold-storage assembly
13- pneumatic engine
14- main electric generator
15- hot-water tank
16- underground heat storage
17- heat pump
18 - air conditioning installation
19 - air filtering system
c.o. - connection to receive hot water for main heating purpose
c.w.u. - connection to receive hot water for utility purposes
~AC - connection for an alternating current

### Exemplary embodiments of the invention

The system for storing energy and producing electricity herein disclosed makes use of a wind turbine 1 to gather the energy of the wind and power the rest of the main components of the system.

The wind turbine 1 can be virtually of any type - it can have a horizontal or vertical axis of rotation, it can have few (like 3-4) blades or it can have many (like 5-10 or more) blades, it can be mounted on a dedicated tower or it can be attached to a pole, a roof or a wall of the building or even a tree-trunk.

What is important with respect to the wind turbine 1, is that is does not have a dedicated (one could say "big" in size and power) electrical generator, that is usually provided with such turbine to convert the rotational energy of the turbine 1 into electricity. It helps in lowering the overall cost of the turbine 1 as well as in reducing the weight of the turbine 1.

In some embodiments, the wind turbine 1 is provided with an auxiliary engine-generator 3, but the power of such auxiliary engine-generator 3 would be many times smaller than the biggest attachable and potentially dedicated generator for such wind turbine 1.

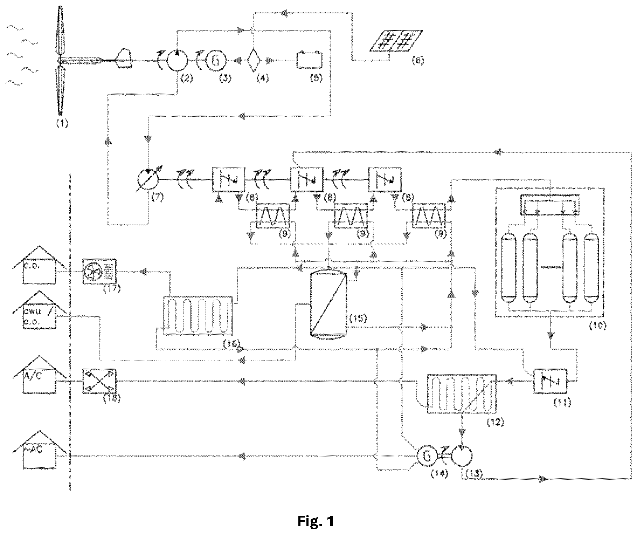

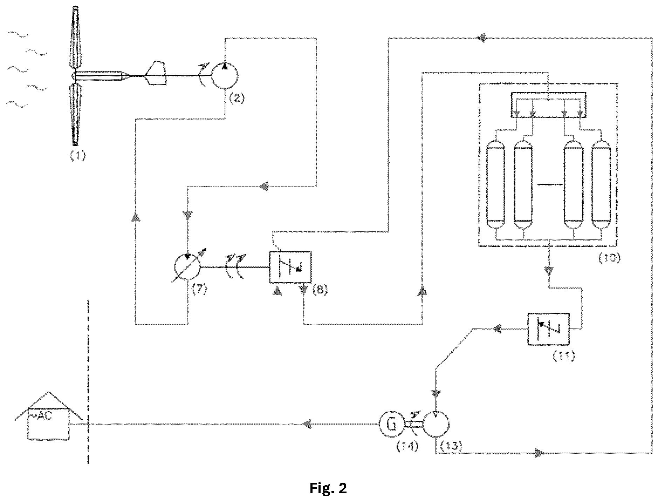

Instead of a classic generator - the turbine 1 is provided with a hydraulic pump 2, so that when the wind is blowing and the turbine 1 is rotating - it pumps a fluid through an assembly of hydraulic hoses (which preferably are pressure resistant) and through a hydraulic engine 7, forming a closed loop (compare with Fig. 1 and Fig. 2). The hydraulic pump 2 is much smaller and weighs less compared to a classical generator-so it is easy to equip the wind turbine 1 with it. On the other hand, the assembly of hydraulic hoses allows to direct a fluid to and from the pump 2, so that the rest of the components of the system - starting with the hydraulic engine 7 - can be located further away from the turbine 1, e.g. in a dedicated room and protected from the weather.

The assembly of hydraulic hoses and the working medium (fluid flowing via them and through the pump 2 and the hydraulic engine 7) can be selected individually-with respect to the location of where such system would be placed and the expected weather (especially - temperatures).

The hydraulic engine 7 utilizes the energy of the pressurized fluid and is mechanically coupled to a compressor assembly 8, in which there is at least one compressor 8. The compressor assembly 8 gathers the air from the atmosphere and preferably cleans/filters it before compressing it to a high pressure.

The compressor 8 can be of any suitable type that would be operable and powered by means of a connection to a rotating shaft, said shaft being rotated by the hydraulic engine 7.

Outlet of the compressor 8 is then coupled via pressurized air conduits and suitable valves to a compressed gas storage assembly 10, where the pressurized air tanks store the pressurized air so that it can be used, whenever there would be a demand for electricity. Using relatively classical pressurized air tank allows to store the pressurized air for very long periods of time, without the drawback of losing the storage capacity with each use - how it happens with any currently available electro-chemical cells. Also, pressurized air tanks have been in use for a very long time now and the technology is time-tested, safe and simple. Furthermore - there are many manufacturers of such tanks and the equipment for them (valves, pressurized air conduits, pressure gauges etc.), so the prices are relatively competitive and not too high.

What is more - any repairs or maintenance is much easier for a pneumatic system (like the compressor assembly 8 and the compressed gas storage assembly 10) or even a hydraulic system (the loop with hydraulic pump 2 and hydraulic engine 7) than those for a highly advanced electronic systems.

Described herein parts constitute the part of the disclosed system that relates to storing energy.

The compressed gas storage assembly 10, having a charging side (to which the compressor assembly 8 is connected) - it also has a discharging side - which is connected to a depressurizing assembly 11, in which the compressed air decompresses to a degree, and from which it is directed to a pneumatic engine 13 coupled to a main electric generator 14. From there - the electricity (be it AC or DC current) can be supplied to power a household or some more industrial or agricultural systems or equipment.

The air (preferably at least some portion of it) discharged from the pneumatic engine 13 is preferably directed via a set of conduits (a feedback line) back to the compressor assembly 8, so that it can be used again (compare with Fig. 1 and Fig. 2) thus reducing the amount of air that has to be cleaned/filtered and de-humidified. It should be understood that such feedback line would be used mainly when while there is a need for electricity (so that pneumatic engine 13 is fed with air) while simultaneously - there is some wind blowing, so that the compressor assembly 8 is working. While there would be no wind blowing-the wind turbine 1 would not be working, so there would be no real use for the air to be directed from the pneumatic engine 13 back to the compressor assembly 8.

This constitutes mostly a basic variant of the disclosed invention (compare with Fig. 2), whereas there are many preferable but optional upgrades and modifications that can be made to it.

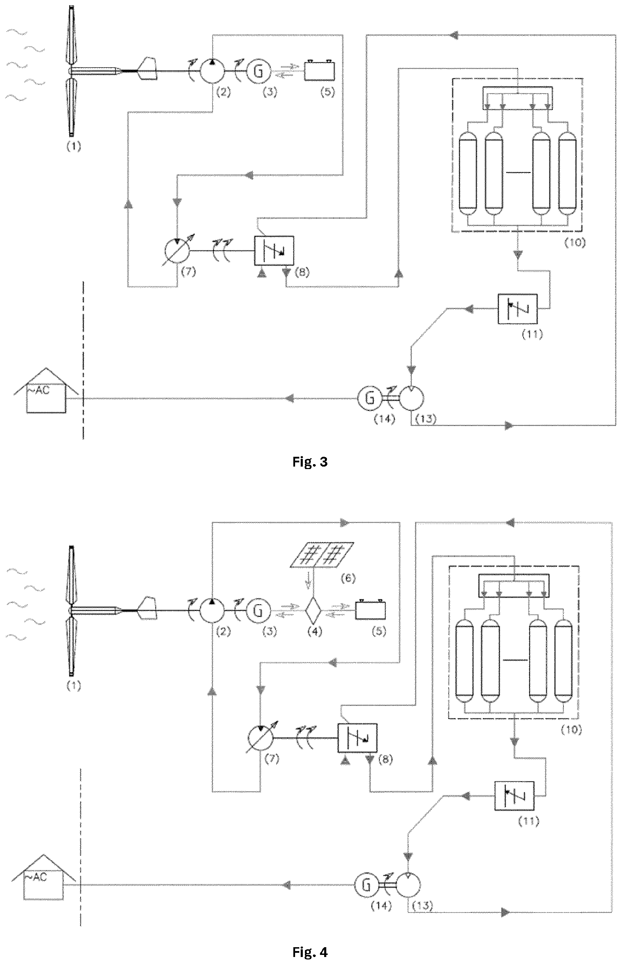

In some embodiments, the turbine 1 is provided with an auxiliary engine-generator 3 that is coupled to the rotor of the wind turbine 1 via a disengaging clutch, and an electrical storage device 5 (compare with Fig. 3), so that the auxiliary engine-generator 3 may serve three main purposes:
- it can help during start-up, by helping the rotor of the turbine 1 to reach the desired rotational speed more quickly,
- it can generate electricity to be stored in the electrical storage device 5, for future use by the auxiliary engine-generator 3,
- it can disengage through the clutch from the rotor of the wind turbine 1, so that it doesn't cause unnecessary resistance and efficiency losses.

Such auxiliary engine-generator 3 is also helpful when there are rapid changes in the speed of wind or there are pulsations of the pressure of the fluid in the assembly of the hydraulic hoses - in such cases the clutch engages the auxiliary engine-generator 3 with the rotor of the wind turbine 1 and uses some of the electrical energy stored in the electrical storage device 5 to stabilize the operation of the system.

In some preferable embodiments - the system is further equipped with a photovoltaic module 6 (compare with Fig. 4), which allows to charge the electrical storage device 5 even without engaging the auxiliary engine-generator 3. In such cases - it is also preferable that the system includes a regulator 4, so that it can manage the flow of electricity between the photovoltaic module 6 and the engine-generator 3 and the electric storage device 5.

In some embodiments, it is highly desirable to improve the disclosed system by using the means for recovery of energy, especially in form of heat exchangers 9 coupled with heat -storage devices 15, 16. In such embodiments - the heat exchangers 9 are added to the compressor assembly 8, so that on one hand the heat generated along with increasing the pressure of air can be extracted and stored, but on the other- in case of utilizing several compressors 8 in series or a compressor 8 that has several stages - to decrease the temperature of the air so that it consumes less energy to reach higher pressures.

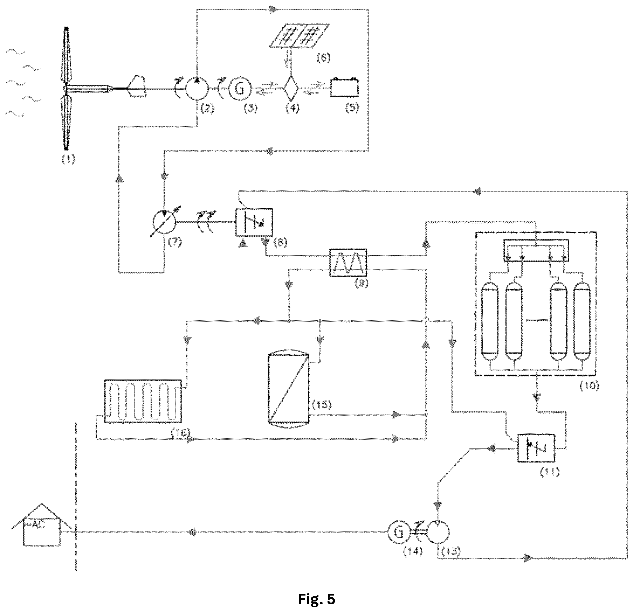

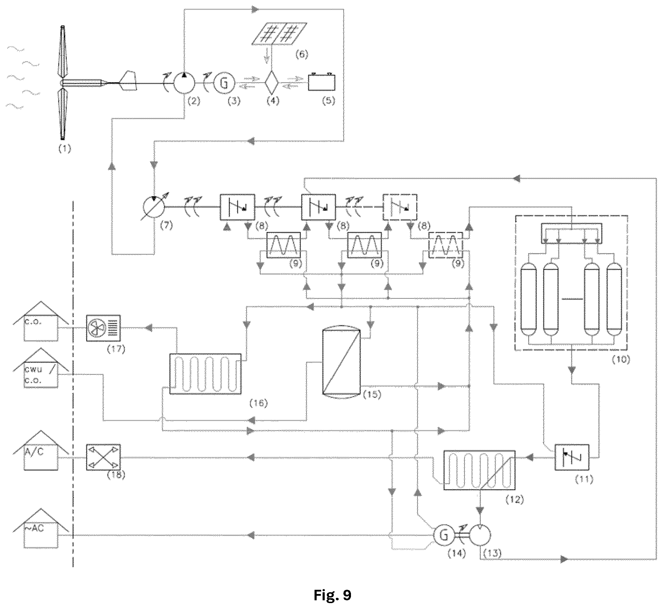

Preferably, such heat exchanger(s) 9 are then provided with conduits that reach heat storage device(s) 15, 16, so that heat extracted from the compressed air can be stored for later use for heating purposes (compare with Fig. 5 and Fig. 9).

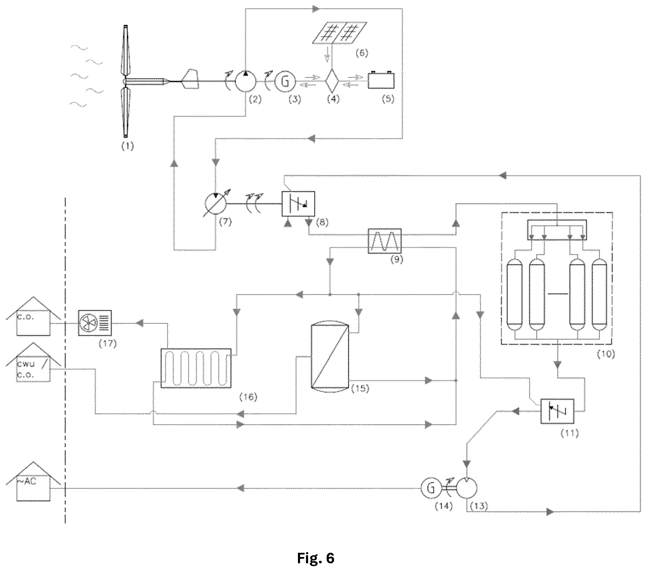

Due to a desired further use of such heat store in the heat storage device(s) 15, 16 - they can have a different form, e.g. they can be isolated water tanks 15 - when the desired use for heat is mainly to provide hot utility water, or they can be in form of underground heat storages 16 (e.g. slabs of concrete, rocks, but even dedicated sections of specific ground) so that they can be combined with a heat pump and can provide central heating for a building (compare with Fig. 6).

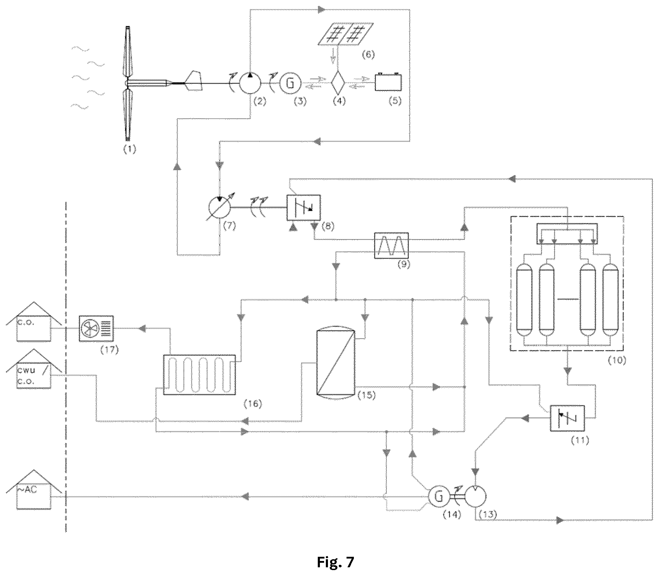

Also, the system can be further equipped with a cooling system for the main generator (compare with Fig. 7), so that the excessive heat from it can be retrieved and stored in the heat storage device(s) 15, 16 for later use.

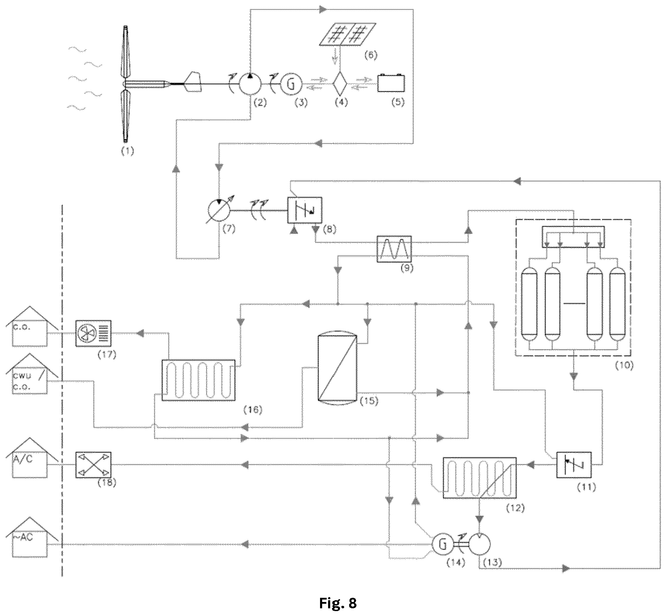

Furthermore, in some embodiments the system is also equipped with cold-storage assembly 12 (compare with Fig. 8), so that the cold temperature of the compressed air that decompressed in the depressurizing assembly 11 can be utilized, especially for use as a source of cold for the air conditioning installation 18.

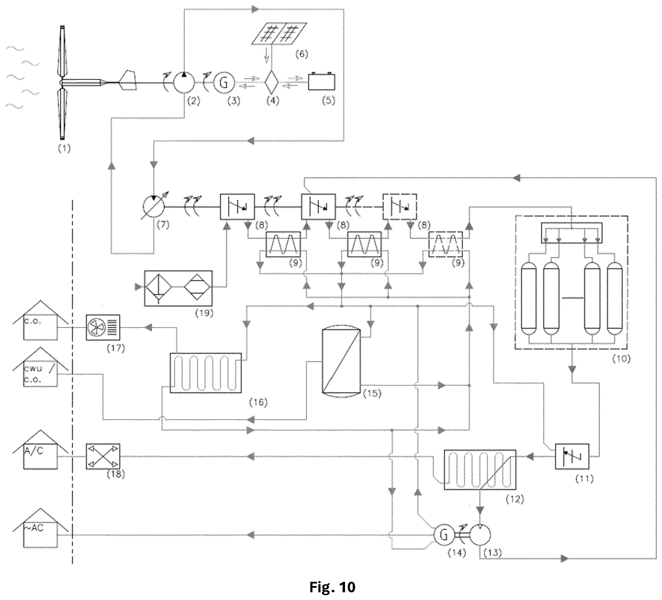

Also, it is very preferable that the system is also provided with an air filtering system 19 (compare with Fig. 10) that can also perform de-humidifying of the air taken from the atmosphere in order to reduce the risk of pneumatic elements of the system corroding, getting damaged etc.

In most basic version of the disclosed system - there is provided a single wind turbine 1 that (indirectly - via hydraulic components) powers a single hydraulic engine 7 and a single compressor assembly 8.

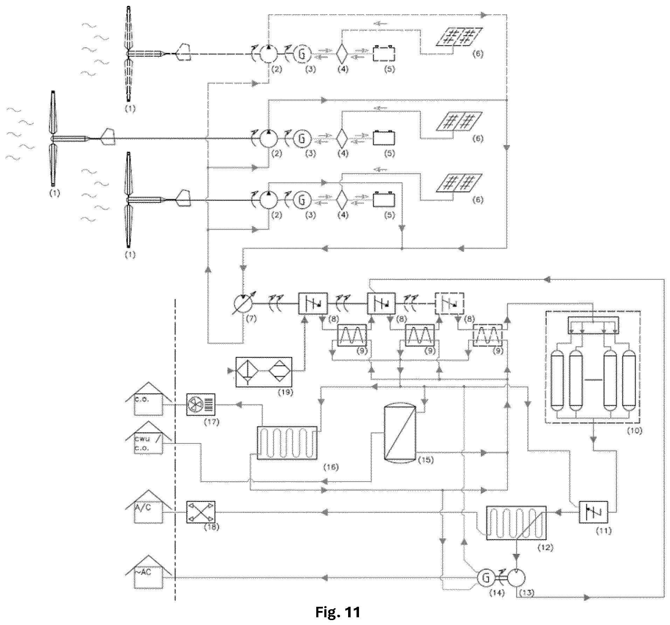

However-there are preferable embodiments, where the system comprises more than one wind turbine 1, wherein each wind turbine 1 is provided with its own hydraulic pump 2, and such assembly of two or more wind turbines 1 is connected to a single hydraulic engine 7 (compare with Fig. 11). Such embodiments require more careful planning with respect to the assemblies of hydraulic hoses, but allow to use a higher-power hydraulic engine 7 and compressor assembly 8, while using a number of relatively smaller-power wind turbines 1.

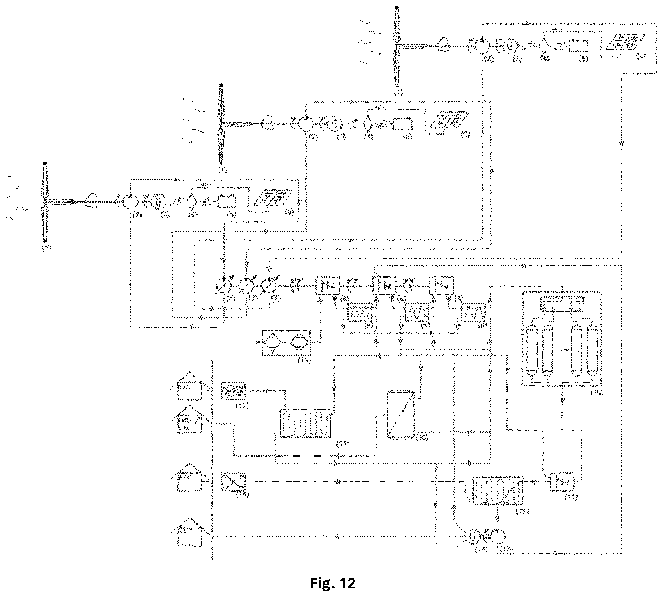

On the other hand, there are also different preferable embodiments, where the system includes as many hydraulic engines 7 as there are wind turbines 1 (for example two, four, seven etc.), but said hydraulic engines 7 are coupled to the shared compressor assembly 8 in a releasable manner (e.g. via clutches) (compare with Fig. 12). Such embodiments are preferable especially, when e.g. due to placement of the wind turbines 1 it is known that not all of them will be operating at the same time.

Preferably, the compressed gas storage assembly 10 of the system comprises easily available and time-tested pressure tanks, that can withstand high pressures of 200-300 bar. Using readily available and well known pressure tanks ensures that the system can be relatively easily constructed, and potential repairs and maintenance can be performed using parts and tools that are readily available. Also-such tanks are currently normalized with respect to their structure and associated equipment, so that no new parts need to be designed, and the ones that are used - are secure in use.

It should be noted, that the present disclosure doesn't cover all of the parts of the system - valves, pressure and temperature gauges, means for sealing the connections, controllers and regulators of particular devices (e.g. brake for the wind turbine 1, regulators and controllers for the engines 7, 3, 13 and pump 2 etc.), however person skilled in the art- based on the information disclosed herein - would be able to complete the disclosed system using their own skills and knowledge.

Preferably-the system is also provided with means for wireless communication, so that working parameters of its components can be monitored remotely and can be easily recorded and stored by a computer etc.

The disclosed system is preferably used for providing electrical power (and potentially - heat/cold) for a building or a structure. In many preferable embodiments - it can be used to provide main or back-up power source for a single household or a single (small) farm, but it can be easily scaled up. Thanks to the use of easily available and well known components (hydraulic and pneumatic) - it can be designed and built to store a lot of energy (by increasing the number-thus total volume of the compressed gas storage assembly 10), and by selecting a proper pneumatic engine 13 with a main generator 14 - it can either provide smaller power for a longer time, or a high power for a shorter time. In some extreme variants - the system may be provided with more than one pair of pneumatic engine13 - main generator 14, so that one pair can be utilized when there is very little power needed, and the other - when there is a high demand for electricity.

Considering typical amount of electricity used by an average household (which e.g. in Poland is around 3000 KWh per year - which means around 8,3 KWh per day), and that usually-people would decide for a backup energy source allowing them to function for about 1 to 30 days, but also taking into account the most typical weather conditions with respect to windy days (and howthey highly vary with respect to the region and characteristics of the land) - it has been found that there is a dedicated proportion of the rated power of the wind turbine 1 with respect to the total volume of the pressure tanks in the compressed gas storage assembly 10.

Although one can decide for a totally different or extreme power-to-volume ratio (e.g. low power of the wind turbine 1 but high total volume of the pressure tanks, used in a summer house, where for the most of the year the energy can accumulate and it will be only used when the owner arrives for couple of weeks in the summer), it has been found that preferably:
- for each 1 KW of rated power of the wind turbine 1
- there should be from 2 to 60 dm³ of volume in the compressed gas storage assembly 10, considering that it is suitable for use with pressures of 200-300 bar.

## Claims

1. A system for storing energy and producing electricity, comprising:
- a wind turbine (1),
- a hydraulic pump (2), connected mechanically with the turbine (1), so that the turbine (1) can power the pump (2),
- a hydraulic engine (7),
- an assembly of hydraulic hoses, that connects the hydraulic pump (2) with the hydraulic engine (7), forming a closed loop,
- a compressor assembly (8), mechanically connected to the hydraulic engine (7), so that the engine (7) can power the compressor assembly (8),
- a compressed gas storage assembly (10), comprising pressurized air tanks along with pressurized air conduits and valves, having a charging side and discharging side,
- a depressurizing assembly (11), connected with the discharging side of the compressed gas storage assembly (10),
- a pneumatic engine (13), connected to the depressurizing assembly (11),
- a main electric generator(14), mechanically connected to and powered by the pneumatic engine (13),
wherein the system further comprises a feedback line, connecting the pneumatic engine (13) back to the compressor assembly (8).

2. The system according to claim 1, wherein the system further comprises:
- an auxiliary engine-generator (3), mechanically connected to the turbine (1) and the pump (2) via a disengaging clutch and configured to work in at least three modes of operation:
i - generating electricity
ii - standby
iii - start-up
and wherein the system further comprises an electrical storage device (5),
wherein in mode i - the engine-generator (3) utilizes mechanical energy of the rotating turbine (1) to produce electricity and provide it to the electrical storage device (5),
wherein in mode ii - the engine-generator (3) uses the clutch to disengage from the turbine (1) and the pump (2), so that it doesn't cause any unnecessary efficiency losses,
wherein in mode iii - the engine-generator (3) utilizes the electricity stored in the electrical storage device (5) to help the turbine (1) and the pump (2) to start rotating with a desired speed, and if needed-to help compensate for the possible rapid changes in the rotational speed of the turbine (2) or differences of pressure in the assembly of the hydraulic hoses.

3. The system according to claim 2, wherein the system further comprises a photo-voltaic module (6) connected to the engine-generator (3) and the electrical storage device (5) via a regulator (4).

4. The system according to any of the proceeding claims 1, 2 or 3, wherein it further comprises a heat-recovery assembly, comprising:
- at least one heat exchanger (9), connected with the compressor assembly (8),
- at least one heat-storage device (15, 16),
- an assembly of conduits, connecting the at least one heat exchanger (9) with the at least one heat-storage device (15, 16) and forming a closed loop.

5. The system accordingto claim 4, wherein the at least one heat storage device (15, 16) is in form of an isolated hot-water tank (15).

6. The system according to claim 4 or 5, wherein the at least one heat storage device (15, 16) is in form of an underground heat storage (16), that is further connected with a heat pump (17).

7. The system according to claim 4, 5 or 6, wherein the heat-recovery assembly further comprises a cooling system of the main generator (14), to retrieve heat generated by the generator (14).

8. The system according to any of the proceeding claims, wherein it further comprises a cold-storage assembly (12), which is configured such that the air passes through it after leaving the depressurizing assembly (11) an before reaching the pneumatic engine (13),
wherein said cold-storage assembly (12) is further connected with a recuperation or AC installation (18).

9. The system according to claim 4, 5, 6, 7 or 8, wherein the compressor assembly (8) comprises two or more compressors, wherein the there is one heat exchanger (9) arranged for each of the compressors.

10. The system according to any of the proceeding claims from 1 to 9, wherein the compressor assembly (8) is provided with an air filtering system, preferably also including a de-humidifying system.

11. The system according to any of the proceeding claims from 1 to 10, wherein there is more than one wind turbine (1) and more than one hydraulic pump (2),
wherein each of the wind turbines (1) powers its' own hydraulic pump (2), but all of the hydraulic pumps (2), via their respective assemblies of hydraulic hoses, provide pressurized liquid to power a single hydraulic engine (7).

12. The system accordingto any of the proceeding claims from 1 to 10, wherein there is more than one wind turbine (1) and more than one hydraulic pump (2), and more than one hydraulic engine (7),
wherein each of the wind turbines (1) powers its' own hydraulic pump (2), and each hydraulic pump (2), via their respective assemblies of hydraulic hoses, provides pressurized liquid to power their respective hydraulic engines (7),
wherein the hydraulic engines (7) are connected mechanically and in a releasable manner with a shared compressor assembly (8).

13. The system according to any of the proceeding claims from 1 to 12, wherein the pressurized air tanks of the compressed gas storage assembly (10) are chosen from the normalized tanks, that can withstand the pressures of 200-300 bar,
and wherein the compressor assembly (8) is suitable and configured for compressing the air to the pressures of 200-300 bar.

14. The system according to claim 13, wherein it scaled such, that the power of the turbine(s) (1) and the maximum capacity of the compressed gas storage assembly (10) relate to each other in a following manner - for each 1 KW of rated power of the wind turbine(s) (1) the compressed gas storage assembly (10) has the total storage volume between 2 to 60 dm³.
